(19) Europäisches Patentamt
European Patent Office
Office européen des brevets

(11) **EP 2 146 115 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(51) Int Cl.:
*F16H 41/26* (2006.01)   *F16H 41/28* (2006.01)

(21) Anmeldenummer: **09164482.3**

(22) Anmeldetag: **03.07.2009**

(54) **Hydrodynamischer Drehmomentwandler**

Hydrodynamic torque converter

Convertisseur de couple hydrodynamique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.07.2008   DE 102008033851**

(43) Veröffentlichungstag der Anmeldung:
**20.01.2010 Patentblatt 2010/03**

(73) Patentinhaber: **ZF Friedrichshafen AG**
**88038 Friedrichshafen (DE)**

(72) Erfinder:
• **Mencher, Georg**
**97506, Grafenrheinfeld (DE)**
• **Sueck, Gregor**
**97526, Sennfeld (DE)**

(56) Entgegenhaltungen:
**EP-A- 0 728 961   DE-A1- 19 736 874**
**US-A- 5 640 849   US-A1- 2003 110 764**

**Beschreibung**

Die vorliegende Erfindung betrifft einen hydrodynamischen Drehmomentwandler, umfassend ein mit Fluid gefülltes oder füllbares Gehäuse, an dem Gehäuse ein Pumpenrad mit in Umfangsrichtung um eine Drehachse aufeinander folgenden Pumpenradschaufeln, in einem Gehäuseinnenraum des Gehäuses ein dem Pumpenrad gegenüberliegendes Turbinenrad mit in Umfangsrichtung um die Drehachse aufeinander folgenden Turbinenradschaufeln, wobei im Wandlerbetrieb Fluid in einer Fluidzirkulation zwischen dem Pumpenrad und dem Turbinenrad strömt, ein in einer Drehrichtung um die Drehachse drehbares Leitrad mit in Umfangsrichtung um die Drehachse aufeinander folgenden Leitradschaufeln, welche in einem radial inneren Bereich der Turbinenradschaufeln und der Pumpenradschaufeln zwischen diesen derart angeordnet sind, dass die Fluidzirkulation zwischen dem Turbinenrad und dem Pumpenrad die Leitradschaufeln umströmt, und wobei zwischen in Umfangsrichtung aufeinander folgenden Leitradschaufeln ein derartiger Umfangsabstand gebildet ist, dass die Leitradschaufeln sich in Umfangsrichtung nicht überlappen und dass der Umfangsabstand im Bereich eines inneren Stromfadens der Fluidzirkulation größer ist, als der Umfangsabstand im Bereich eines äußeren Stromfadens.

Durch die gattungsbildende US 2003/0110764 A1 ist ein solcher hydrodynamischer Drehmomentwandler bekannt, bei welchem sich die Querschnittsflächen der Leitradschaufeln, ausgehend von einem Schaufelträger, in Richtung zu einem radial weiter außen vorgesehenen Schaufelring, verjüngen. Dadurch nimmt der Umfangsabstand zwischen den einzelnen Leitradschaufeln, die sich bereits unmittelbar radial außerhalb des Schaufelträgers in Umfangsrichtung nicht übedappen, nach radial außen weiter zu, um unmittelbar radial innerhalb des Schaufelringes ein Maximum zu erreichen.

Durch eine solche Geometrie der Leitradschaufeln bzw. der relativen Positionierung der Leitradschaufeln bezüglich einander wird es möglich, eine besonders weiche Wandlerkennlinie zu generieren, welche bei großer Drehzahldifferenz zwischen Pumpenrad und Turbinenrad, insbesondere dann, wenn das Turbinenrad bei stehendem Fahrzeug nicht rotiert, auf Grund eines vergleichsweise geringen Pumpenmomentes ein Antriebsaggregat nur gering belastet. Erst bei höherer Drehzahl des Antriebsaggregats und mithin auch des Pumpenrads nimmt das Pumpenmoment entsprechend zu und demgemäß auch das Drehmomentübertragungsvermögen bzw. Wandlungsvermögen des hydrodynamischen Drehmomentwandlers. Dies gestattet es, Brennkraftmaschinen auf Grund geringerer Belastung schneller in einen Drehzahlbereich hochzudrehen, in welchem sie dann auch ein größeres Drehmoment abgeben können.

Aufgrund dieser speziellen Eigenschaft werden hydrodynamische Drehmomentwandler mit der entsprechenden Geometrie und Relativpositionierung der Leitradschaufeln mit Vorzug bei Antriebssystemen eingesetzt, bei welchen die hydrodynamischen Drehmomentwandler kombiniert werden mit turbogeladenen Motoren,. bei welchen ein Problem darin besteht, dass sie bei sehr großen Beschleunigungen (Vollastanfahrten) nur ein sehr geringes Drehmoment abgeben können. Dies resultiert aus der Trägheit des Gesamtsystems Motor und Turbolader. Erst bei höheren Drehzahlbereichen, in denen der Turbolader seinen Ladedruck aufbauen kann, erreichen diese Motoren ein vergleichsweise hohes Drehmoment. Sind derartige Motoren mit herkömmlichen hydrodynamischen Drehmomentwandlern gekoppelt, so fordern diese bei auf das grundsätzlich abgebbare Motordrehmoment abgestimmtem maximalen Pumpenmoment der Drehmomentwandler den Motoren im niederen Drehzahlbereich ein zu hohes Drehmoment ab. Dies hat zur Folge, dass der Drehzahlanstieg der Motoren bis in den Bereich höherer Drehzahlen und somit auch höherer Drehmomente verzögert wird.

Es ist die Aufgabe der vorliegenden Erfindung, einen hydrodynamischen Drehmomentwandler vorzusehen, welcher in einer Startphase das Beschleunigen eines Antriebsaggregats nur wenig beeinträchtigt.

Erfindungsgemäß wird diese Aufgabe gelöst durch einen hydrodynamischen Drehmomentwandler, umfassend ein mit Fluid gefülltes oder füllbares Gehäuse, an dem Gehäuse ein Pumpenrad mit in Umfangsrichtung um eine Drehachse aufeinander folgenden Pumpenradschaufeln, in einem Gehäuseinnenraum des Gehäuses ein dem Pumpenrad gegenüberliegendes Turbinenrad mit in Umfangsrichtung um die Drehachse aufeinander folgenden Turbinenradschaufeln, wobei im Wandlerbetrieb Fluid in einer Fluidzirkulation zwischen dem Pumpenrad und dem Turbinenrad strömt, ein in einer Drehrichtung um die Drehachse drehbares Leitrad mit in Umfangsrichtung um die Drehachse aufeinander folgenden Leitradschaufeln, welche in einem radial inneren Bereich der Turbinenradschaufeln und der Pumpenradschaufeln zwischen diesen derart angeordnet sind, dass die Fluidzirkulation zwischen dem Turbinenrad und dem Pumpenrad die Leitradschaufeln umströmt, und wobei zwischen in Umfangsrichtung aufeinander folgenden Leitradschaufeln ein derartiger Umfangsabstand gebildet ist, dass die Leitradschaufeln sich in Umfangsrichtung nicht überlappen und dass der Umfangsabstand im Bereich eines inneren Stromfadens der Fluidzirkulation größer ist, als der Umfangsabstand im Bereich eines äußeren Stromfadens.

Als besonders vorteilhaft hat sich die erfindungsgemäße Ausgestaltung erwiesen, bei der für das Verhältnis des Umfangsabstandes am äußeren Stromfaden zum Umfangsabstand am inneren Stromfaden gilt:

$$0,05 < A_a / A_i < 0,4.$$

Gemäß einem weiteren Erfindungsaspekt kann bei einem gattungsgemäß aufgebauten hydrodynamischen Drehmomentwandler optional auch in Verbindung mit den vorangehend erläuterten Merkmalsgruppen vorgesehen sein, dass die Leitradschaufeln in ihrem dem Turbinenrad zugewandt liegenden Anströmbereich an einer Druckseite derselben und einer Saugseite derselben ein konvex gewölbtes Außenprofil aufweisen, wobei für wenigstens einen Radialbereich der Leitradschaufein gilt:

a) $0,15 < R_D / Dmax < 0,3$ oder/und
b) $0,1 < R_S / Dmax < 0,25$ oder/und
c) $0,2 < Dmax / L < 0,4$,

wobei:

$R_D$     der Wölbungsradius des Außenprofils im Anströmbereich an der Druckseite in dem Radialbereich ist,

$R_S$     der Wölbungsradius des Außenprofils im Anströmbereich an der Saugseite in dem Radialbereich ist,

Dmax    eine maximale Dicke der Leitradschaufeln in dem Radialbereich ist,

L     eine Profillänge der Leitradschaufeln in dem Radialbereich ist.

Auch die in den Merkmalen a), b) und c) definierten Verhältnisse bzw. die zugeordneten Wertebereiche für diese Verhältnisse können einzeln, optimiert jedoch in Kombination zu einer weichen Wandlerkennlinie beitragen, welche bei geringer Turbinenraddrehzahl, also auch kleinem Verhältnis der Turbinenraddrehzahl zur Pumpenraddrehzahl, auf Grund eines vergleichsweise geringen Pumpenmoments ein schnelles Hochdrehen eines Antriebsaggregats gestattet.
Dabei kann vorteilhafterweise weiter vorgesehen sein, dass der Radialbereich im Wesentlichen die gesamte radiale Erstreckungslänge der Leitradschaufeln umfasst.
Gemäß einem weiteren Aspekt der vorliegenden Erfindung kann bei einem gatttungsgemäßen hydrodynamischen Drehmomentwandler alleine oder in Kombination mit den vorangehend beschriebenen Merkmalsgruppen vorgesehen sein, dass gilt:

d) $0,6 < Dmax < 0,9$ oder/und
e) $1,12 < Mpmax / Mp0 < 1,39$ oder/und
f) $0,8 < MpK / Mp0 < 1,2$,

wobei:

Mpmax    das maximale Pumpenmoment ist,
Mp0    das Pumpenmoment bei einem Verhältnis der Drehzahl des Turbinenrads zur Drehzahl des Pumpenrads von 0 ist,
MpK    das Pumpenmoment an einem Kupplungspunkt des Leitrads ist,

Dmax    das Verhältnis der Drehzahl des Turbinenrads zur Drehzahl des Pumpenrads bei Mpmax ist.

Auch hier sind Wertebereiche für bestimmte Größen bzw. Verhältnisse definiert, deren Einhalten einzeln, optimiert jedoch wieder in Kombination, für eine weiche Wandlerkennung sorgen. Hierzu kann bevorzugt vorgesehen sein, dass gilt:

d1) $0,65 < Dmax < 0,69$
oder
d2) $0,71 < Dmax < 0,74$
oder
d3) $0,76 < Dmax < 0,85$.

Die vorliegende Erfindung wird nachfolgend mit Bezug auf die beiliegenden Figuren detailliert beschrieben. Es zeigt:

Fig. 1    eine Teillängsschnittansicht eines hydrodynamischen Dreh- momentwandlers;

Fig. 2    im Querschnitt 2 in Umfangsrichtung aufeinander folgende Leitradschaufeln im Bereich eines inneren Stromfadens;

Fig. 3    eine der Fig. 2 entsprechende Darstellung zweier in Umfangsrichtung aufeinander folgender Leitradschaufeln im Bereich eines äußeren Stromfadens;

Fig. 4    ein Querschnittprofil einer Leiterradschaufeln;

Fig.5    ein Diagramm, welches verschiedene Wandlerkenngrößen aufgetragen über dem Drehzahlverhältnis D, zwischen Turbinenrad und Pumpenrad zeigt;

Fig. 6    ein Diagramm, welches aufgetragen über der Drehzahl des Pumpenrads bzw. eines Antriebsaggregats Motorkennlinien und Wandlerkennlinien anhand eines jeweiligen Drehmoments veranschaulicht.

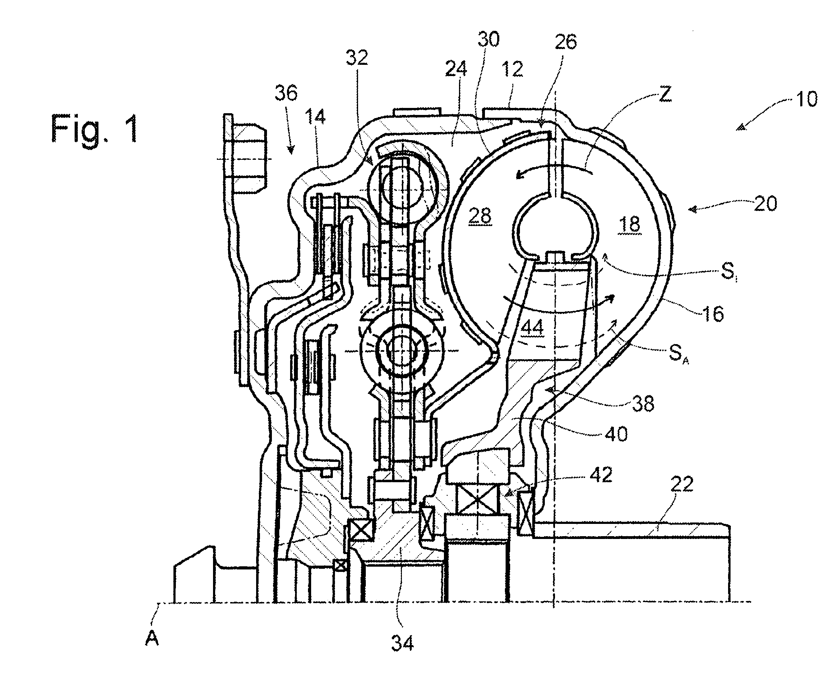

Die Fig. 1 zeigt ein Beispiel eines hydrodynamischen Drehmomentwandlers, der beispielsweise eingesetzt wird, um in einem Antriebsstrang eines Fahrzeugs ein Drehmoment zwischen einem Antriebsaggregat, im Allgemeinen einer Brennkraftmaschine, und einem Getriebe, beispielsweise einem Automatikgetriebe, übertragen zu können. Es sei bereits hier darauf hingewiesen, dass der dargestellte und im Folgenden hinsichtlich seiner wesentlichen Aspekte beschriebene hydrodynamische Drehmomentwandler 10 nur ein Beispiel eines hydrodynamischen Drehmomentwandlers ist, der selbstverständlich in verschiedensten Aspekten anders ausgebildet sein könnte.

Der Drehmomentwandler 10 umfasst ein Gehäuse 12 mit einer motorseitigen Gehäuseschale 14 und einer getriebeseitigen Gehäuseschale 16. Die motorseitige Gehäuseschale 14 wird an eine Antriebswelle, also beispielsweise eine Kurbelwelle einer Brennkraftmaschine, angekoppelt. Die getriebeseitige Gehäuseschale 16 bildet einerseits zusammen mit an einer Innenseite derselben getragenen Pumpenradschaufel 18 ein Pumpenrad 20 und trägt andererseits in ihrem radial inneren Bereich eine Pumpennabe 22, die in ein Getriebe eingreifend eine Ölpumpe antreiben kann. In einem Gehäuseinnenraum 24 ist ein allgemein mit 26 bezeichnetes Turbinenrad vorgesehen, welches in Richtung einer Drehachse A dem Pumpenrad 20 axial gegenüberliegt und mit diesem einen torusartigen Raum definieren.

Das Turbinenrad 26 bzw. eine Schale 30 desselben ist über eine Torsionsschwingungsdämpferanordnung 32 mit einer Turbinenradnabe 34 zur gemeinsamen Drehung um die Drehachse gekoppelt. Die dargestellte Torsionsschwingungsdämpferanordnung 32 ist zweistufig, wobei eine erste Stufe zwischen einer Überbrückungskupplung 36 und der Turbinenradschale 30 wirkt, während eine zweite Stufe zwischen der Turbinenradschale 30 und der Turbinenradnabe 34 wirkt. Dies bedeutet, dass bei ausgerückter Überbrückungskupplung nur die radial innere Dämpferstufe zur Torsionsschwingungsdämpfung wirksam ist, während bei eingerückter Überbrückungskupplung 36 beide Dämpferstufen seriell wirksam sind.

Zwischen dem Pumpenrad 20 und dem Turbinenrad 26 ist ein allgemein mit 38 bezeichnetes Leitrad vorgesehen. Dieses umfasst einen Leitradring 40, der über eine Freilaufanordnung 42 auf einer nicht dargestellten Stützhohlwelle so getragen ist, dass in einer Richtung um die Drehachse A rotieren kann, gegen Rotation in der anderen Richtung jedoch blockiert ist. In seinem radial äußeren Bereich trägt der Leitradring 40 eine Mehrzahl von in Umfangsrichtung aufeinander folgenden und im Wesentlichen radial außen sich erstreckenden Leitradschaufeln 44, die somit zwischen dem radial inneren Bereich der Turbinenradschaufeln 28 und der Pumpenradschaufeln 18 liegen.

Eine im Wandlerbetrieb aufgebaute Fluidzirkulation Z, welche das Pumpenrad 20 radial außen in Richtung auf das Turbinenrad 26 zu verlässt und in dem Rotationstorus radial innen das Turbinenrad 26 in Richtung auf das Pumpenrad 20 zu verlässt, umströmt in diesem radial inneren Bereich die Leitradschaufeln 44, d.h., strömt zwischen diesen hindurch, was bekanntermaßen zur Drehmomentenabstützung und damit der Drehmomentverstärkungsfunktionalität eines derartigen hydrodynamischen Drehmomentwandlers führt.

Mit Strichlinien sind in der Fig. 1 weiterhin der Bereich eines inneren Stromfadens $S_i$ sowie der Bereich eines äußeren Stromfadens $S_a$ der Fluidzirkulation Z dargestellt. Man erkennt hier, dass der innere Stromfaden $S_i$ denjenigen Bereich bzw. Anteil des in der Fluidzirkulation rotierenden Fluids bezeichnet, welcher, bezogen auf ein in dem Rotationstorus liegendes Zentrum, am weitesten radial innen liegt. Der äußere Stromfaden $S_a$ bezeichnet denjenigen Bereich bzw. Anteil der Fluidzirkulation Z, der, bezogen auf das Zentrum des Rotationstorus, am weitesten radial außen, mithin auch am nähersten an der Turbinenradschale 30 bzw. der getriebeseitigen Gehäuseschale 16 liegt.

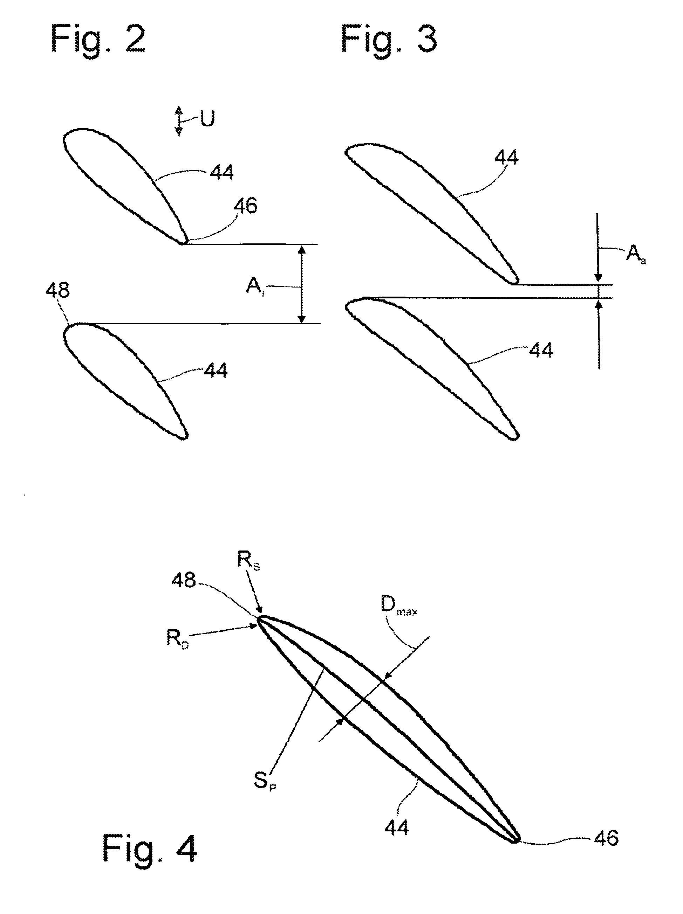

Die Fig. 2 zeigt im Querschnitt, Querschnitt hier bezogen auf ihre eigene im Wesentlichen radial stehende Längsachse, in einer Umfangsrichtung U aufeinanderfolgende Leitradschaufeln 44, wobei der Schnitt der Fig. 2 im Bereich des inneren Stromfadens $S_i$ vorgenommen ist. Entsprechend zeigt die Fig. 3 einen Schnitt derartiger, in Umfangsrichtung aufeinanderfolgender Leitradschaufeln 44 im Bereich des äußeren Stromfadens $S_a$.

Man erkennt zunächst, dass über ihre gesamte radiale Erstreckung ausgehend von Leitradring 40 nach radial außen diese in Umfangsrichtung aufeinanderfolgenden Leitradschaufeln 44 so zueinander positioniert sind, dass sie sich in Umfangsrichtung nicht überlappen. Dies bedeutet, dass zwischen einem Abströmendbereich 46 einer Leitradschaufel 44 und einem Anströmendbereich 48 einer in Umfangsrichtung unmittelbar folgenden Leitradschaufel 44 ein Umfangsabstand $A_i$ für den Bereich des inneren Stromfadens $S_i$ bzw. $A_a$ für den Bereich des äußeren Stromfadens $S_a$ besteht.

Bei einem erfindungsgemäß ausgestalteten hydrodynamischen Drehmomentwandler ist nunmehr vorgesehen, dass das Verhältnis dieser Umfangsabstände $A_a / A_i$ in einem Bereich liegt, der größer als 0,05, jedoch kleiner als 0,4 ist. Mithin ist also die Bedingung erfüllt:

$$0{,}05 < A_a / A_i < 0{,}4.$$

Dabei erkennt man weiter, dass die Geometrie der Leitradschaufeln 44 derart gewählt ist, dass deren Profillänge, also die Länge einer in der Fig. 4 erkennbaren Skelettlinie L, von radial innen nach radial außen, also vom Bereich des äußeren Stromfadens $S_A$ zum Bereich des inneren Stromfadens $S_i$ abnimmt.

Ein weiterer Ausgestaltungsaspekt, der bei einem erfindungsgemäßen hydrodynamischen Drehmomentwandler bzw. beim Leitrad 38 desselben realisiert sein kann, ist in Fig. 4 veranschaulicht. Man erkennt hier ein Querschnittprofil einer Leitradschaufel 44 in einem vorbestimmten Radialabstand zur Drehachse A. In der Fig. 4 links liegt der Anströmendbereich 48, also derjenige Endbereich einer jeweiligen Leitradschaufel 44, welcher dem Turbinenrad 26 zugewandt liegt. Rechts unten erkennt man den Abströmendbereich 46, also denjenigen Endbereich, der dem Pumpenrad 20 zugewandt liegt. Man erkennt die Skelettlinie Sp des Leitradschaufelprofils 44, welche im Wesentlichen eine Längsmittellinie dieses Profils definiert.

Pfeile $R_S$ bzw. $R_D$ bezeichnen den Wölbungsradius bzw. Krümmungsradius des Leitradschaufelprofils an der in der Fig. 4 über der Leitradschaufel 44 liegenden Saugseite bzw. der hier unten liegend und somit dem Turbinenrad stärker zugekehrt orientierten Druckseite der Leitradschaufel 44. Ausgehend von einem zentralen Bereich des Anströmendbereichs 48, von welchem auch die fiktive Skelettlinie Sp ausgeht, weist an der Druckseite und an der Saugseite das Außenprofil der Leitradschaufel 44 zumindest über einen Bereich einen näherungsweise konstanten Wölbungsradius $R_S$ bzw. $R_D$ auf. Dieser geht weiter entfernt vom Anströmendbereich 48 dann ohne Knickpunkt, d.h. tangential in einen Bereich mit größerem Krümmungsradius über. Beispielsweise kann das Profil sowohl an der Saugseite als auch an der Druckseite aus drei Bereichen unterschiedlichen Krümmungsradius gebildet sein.

Gemäß einem weiteren Aspekt der Erfindung kann die Geometrie bzw. Profilierung einer derartigen Leitradschaufel so sein, dass, jeweils betrachtet für einen bestimmten Radialabstand zur Drehachse zumindest eine der folgenden Bedingungen erfüllt ist:

$$0{,}15 < R_D / Dmax < 0{,}3,$$

$$0{,}1 < R_S / Dmax < 0{,}25,$$

$$0{,}2 < Dmax / L < 0{,}4,$$

wobei Dmax die beispielsweise orthogonal zur Skelettlinie $S_P$ gemessene maximale Dicke einer Leitradschaufel 44 in dem betrachteten Radialbereich ist und L die Profillänge, also im Wesentlichen die Länge der Skelettlinie $S_P$ ist. Da eine derartige Geometrie, die vorzugsweise für die gesamte radiale Erstreckungslänge einer Leitradschaufel 44, insbesondere dort, wo diese in die Fluidzirkulation Z eingreift, gilt, wird es möglich, bei sehr kleinen Werten des Verhältnisses der Drehzahl des Turbinenrads zur Drehzahl des Leitrads eine starke Strömungsablösung zu erreichen. Bei größeren Werten dieses Verhältnisses wird eine im Wesentlichen verlustfreie Strömung erzielt.

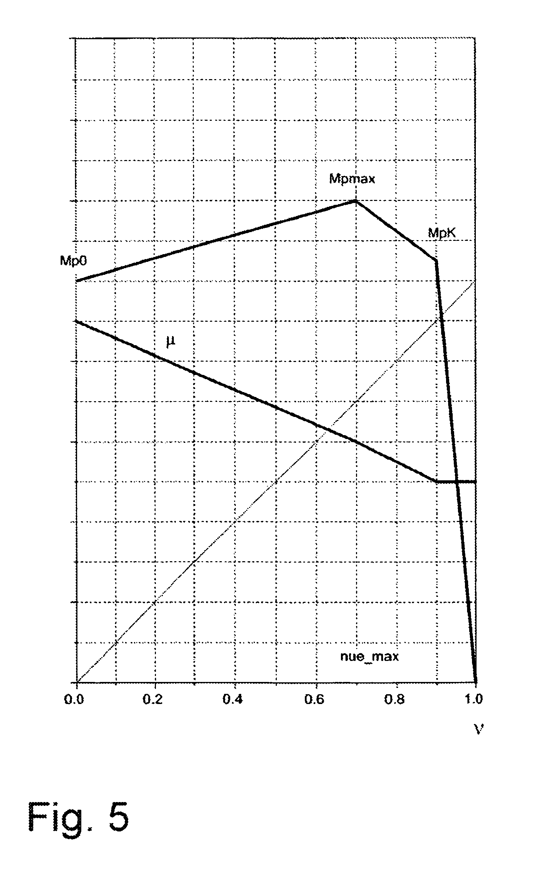

Durch die vorangehend erläuterte Ausgestaltung der Leitradschaufeln 44 an sich bzw. deren Relativpositionierung zueinander wird ein Wandlerverhalten erreicht, wie es anhand des in Fig. 5 dargestellten Diagramms im Folgenden erläutert ist. Dabei ist insbesondere aufgetragen über dem Verhältnis □ der Drehzahl des Turbinenrads zur Drehzahl des Pumpenrads das Pumpenmoment Mp beispielsweise für eine Drehzahl des Pumpenrads 20 von 2.000 Umdrehungen pro Minute. Man erkennt einen Wert Mp0, welcher das Pumpenmoment, also das von der Pumpe und mithin im Wandler aufgenommene bzw. abgestützte Drehmoment bei nicht rotierendem Turbinenrad 26, also einem Verhältnis D von Null. Das Pumpenmoment steigt mit ansteigendem Verhältnis D auf einen Maximalwert Mpmax an, sinkt dann bis zu einem Kupplungsmoment MpK ab, ab welchem dann ein steiler Abfall auf einen Wert von Null folgt. Das Kupplungsmoment MpK repräsentiert dabei denjenigen Zustand bzw. dasjenige Pumpenmoment, bei welchem die Drehmomentenabstützung des Leitrads 38 über die Freilaufanordnung 42 aufgehoben wird, das Leitrad 38 also von der dieses tragenden Stützhohlwelle momentenabstützungsmäßig entkoppelt wird und mithin im Wesentlichen auch nicht mehr zur Drehmomentenabstützung beitragen kann.

Die vorangehend beschriebenen Maßnahmen tragen dazu bei, dass bei einem beispielsweise in Abstimmung auf eine bestimmte Brennkraftmaschine vorgegeben Maximalwert Mpmax des Pumpenmoments ein vergleichsweise kleiner Wert Mp0 erzielt wird, so dass für große Drehzahldifferenzen, also im Allgemeinen bei stehendem Fahrzeug, zunächst ein vergleichsweise kleines Pumpenmoment das Hochdrehen der Brennkraftmaschine möglichst wenig behindert, gleichwohl jedoch im optimalen Zustand ein maximales Pumpenmoment Mpmax erzielt wird, das insbesondere auch bei einem vergleichsweise hohen Wert von D liegt, im dargestellten Beispiel etwa bei 0,7. Insbesondere haben sich hier folgende Wertebereiche als besonders vorteilhaft erwiesen,

$$0{,}6 < \text{Dmax} < 0{,}9,$$

$$1{,}12 < Mpmax / Mp0 < 1{,}39,$$

$$0{,}8 < MpK / Mp0 < 1{,}2.$$

Für den ersten Wertebereich des Drehzahlverhältnisses □ haben sich die folgenden Teilbereiche als besonders vorteilhaft erwiesen:

$$0{,}65 < \text{Dmax} < 0{,}69,$$

$$0{,}71 < \text{Dmax} < 0{,}74,$$

$$0{,}76 < D_{max} < 0{,}85.$$

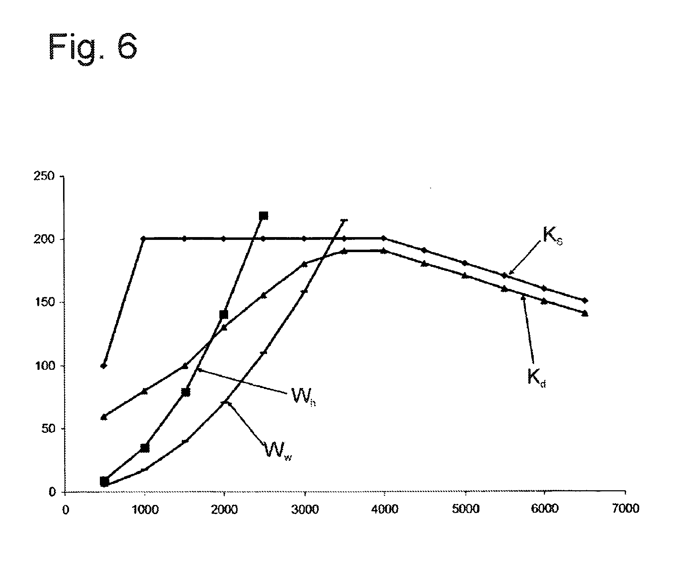

Dabei repräsentiert Dmax denjenigen Wert des Drehzahlverhältnisses D, bei welchem das maximale Pumpenmoment Mpmax erreicht wird. Die vorangehend mit Bezug auf die Fig. 2 und 3 beschriebene Positionierung der Leitradschaufeln 44 und das Auswählen des Umfangsabstandsverhältnisses zwischen dem inneren Stromfaden $S_i$ und dem äußeren Stromfaden $S_a$ im angegeben Bereich unterstützen wesentlich den Anstieg des Pumpenmoments von Mp0 auf Mpmax und mithin die gewünschte weiche Kennung eines hydrodynamischen Drehmomentwandlers. Genutzt wird hierzu der Effekt, dass bei einem sehr kleinen Drehzahlverhältnis der größere Teil des in der Fluidzirkulation zirkulierenden Fluids näher am radial äußeren Stromfaden strömen wird. Bei größeren Drehzahlverhältnissen wird der Massenstrom sich jedoch vergleichmäßigen, d.h. es liegen am inneren und am äußeren Stromfaden jeweils ähnliche Massenstromverhältnisse vor. Dies insbesondere auch kombiniert mit der in Fig. 4 gezeigten Geometrie der Leitradschaufeln 44 führt zu einer ansteigenden Kennung, wie sie in Fig. 5 gezeigt ist. Wie diese sich auf die Wechselwirkung mit einem Antriebsaggregat auswirkt, wird nachfolgend mit Bezug auf die Fig. 6 erläutert.

Man erkennt in der Fig. 6 zunächst zwei Motorkennlinien $K_s$ und $K_d$. $K_s$ repräsentiert die statische Motorkennlinie beispielsweise einer turbogeladenen Brennkraftmaschine, die aufgetragen über der Drehzahl einer Kurbelwelle das abgegebene Drehmoment für einen Zustand repräsentiert, in welchem die Drehzahl sich praktisch nicht ändert. Das heißt, es wird die Brennkraftmaschine bei der Ermittlung dieser Kennlinie Ks auf einen bestimmten Drehzahlwert eingestellt, und dann bei mit konstanter Drehzahl drehendem Aggregat das Drehmoment erfasst. Hingegen bezeichnet die Kennlinie $K_d$ den dynamischen Zustand, also jeweils das bei einer bestimmten Drehzahl abgegebene Drehmoment in einem Zustand, in welchem die Drehzahl sich vergleichsweise schnell ändert. Da in diesem Zustand ein Teil der durch eine Brennkraftmaschine bereitgestellten kinetischen Energie dazu genutzt wird, die verschiedenen sich bewegenden Teile, wie zum Beispiel Kolben und Kurbelwelle, zu beschleunigen, liegt das im dynamischen Falle bei einer jeweiligen Drehzahl aufgenommene Drehmoment insbesondere bei kleineren Drehzahlen deutlich unter dem für den statistischen Fall festgestellten Drehmoment. Weiterhin muss die Trägheit bzw. Totzeit des Turboladers überwunden werden. Der Turbolader kann nur dann seine volle Leistung bringen, wenn er durch den Abgasstrom angetrieben wird. Dies bringt eine gewisse Verzögerung mit sich, die das Motormoment reduziert, da geringerer Ladedruck im Brennraum zur Verfügung steht. Der dynamische Fall ist jedoch derjenige, der im normalen Fahrzustand beim Anfahren, also beim Hochdrehen einer Brennkraftmaschine, auftreten wird. Weiterhin muss die Trägheit der Regelstrecke des Turboladers überwunden werden, was zu einer weiteren Reduzierung des Drehmoment führt.

In der Fig. 6 bezeichnen die Kennlinien $W_h$ und $W_w$ Wandlerkennlinien bei einem Verhältnis D von Null, also zunächst stehendem Fahrzeug und somit nicht rotierendem Turbinenrad. Bei einer vergleichsweise harten Wandlerkennlinie steigt das Pumpenmoment Mp mit der Drehzahl des Pumpenrads vergleichsweise schnell an und übersteigt somit bei vergleichsweise kleiner Drehzahl die dynamische Motorkennlinie $K_d$. Dies bedeutet, dass der hochdrehenden Brennkraftmaschine bereits bei sehr kleiner Drehzahl ein großer Widerstand durch das stark ansteigende Pumpenmoment entgegengesetzt wird, was den Vorgang des Hochdrehens stark verzögert.

Im Falle einer deutlich weicheren Wandlerkennlinie $W_w$, wie sie mit dem erfindungsgemäßen Aufbau eines hydrodynamischen Drehmomentwandlers erreichbar ist, ist dieser Anstieg des Pumpenmoments deutlich verzögert. Erst bei höheren Drehzahlen erreicht das Pumpenmoment das von der Brennkraftmaschine abgegebene Drehmoment. In diesem Drehzahlbereich, der im dargestellten Beispiel bei etwa 3.000 Umdrehungen pro Minute liegt, hat jedoch beispielsweise im Falle einer turbogeladenen Brennkraftmaschine der Turbolader bereits eingesetzt bzw. begonnen, durch seinen Ladebetrieb das Drehmoment deutlich zu erhöhen. Da bei kleineren Drehzahlen das Pumpenmoment jedoch noch geringer war, verglichen mit der härteren Wandlerkennung, konnte die Brennkraftmaschine deutlich schneller in den Bereich höherer Drehzahlen hochdrehen.

Durch die erfindungsgemäßen Maßnahmen wird es möglich, bei einem hydrodynamischen Drehmomentwandler in Abstimmung auf ein durch eine Brennkraftmaschine erzeugbares Drehmoment eine weichere Wandlerkennung zu erzeugen, die ein deutlich schnelleres Hochdrehen gestattet. Dazu können die vorangehend erläuterten Maßnahmen bzw. das Einstellen bestimmter Werte bzw. Verhältnisse in den angegebenen Wertebereichen jeweils einzeln, bevorzugt jedoch selbstverständlich in Kombination vorgesehen werden.

**Patentansprüche**

1. Hydrodynamischer Drehmomentwandler, umfassend ein mit Fluid gefülltes oder füllbares Gehäuse (12), an dem Gehäuse (12) ein Pumpenrad (20) mit in Umfangsrichtung um eine Drehachse (A) aufeinander folgenden Pumpenradschaufeln (18), in einem Gehäuseinnenraum (24) des Gehäuses (12) ein dem Pumpenrad (20) gegenüberliegendes Turbinenrad (26) mit in Umfangsrichtung um die Drehachse (A) aufeinander folgenden Turbinenradschaufeln (28), wobei im Wandlerbetrieb Fluid in einer Fluidzirkulation (Z) zwischen dem Pumpenrad (20) und dem Turbinenrad (26) strömt, ein in einer Drehrichtung um die Drehachse (A) drehbares Leitrad (38) mit in Umfangsrichtung um die Drehachse (A) aufeinander folgenden Leitradschaufeln (44), welche in einem radial inneren Bereich der Turbinenradschaufein (28) und der Pumpenradschaufeln (18) zwischen diesen derart angeordnet sind, dass die Fluidzirkulation (Z) zwischen dem Turbinenrad (26) und dem Pumpenrad (20) die Leitradschaufein (44) umströmt, wobei zwischen in Umfangsrichtung aufeinander folgenden Leitradschaufeln (44) ein derartiger Umfangsabstand gebildet ist, dass die Leitradschaufeln (44) sich in Umfangsrichtung nicht überlappen und dass der Umfangsabstand ($A_i$) im Bereich eines inneren Stromfadens ($S_i$) der Fluidzirkulation (Z) größer ist, als der Umfangsabstand ($A_a$) im Bereich eines äußeren Stromfadens ($S_a$), **dadurch gekennzeichnet, dass** für das Verhältnis des Umfangsabstandes ($A_a$) am äußeren Stromfaden ($S_a$) zum Umfangsabstand ($A_i$) am inneren Stromfaden ($S_i$) gilt:

$$0{,}05 < A_a\,/\,A_i < 0{,}4.$$

2. Hydrodynamischer Drehmomentwandler nach Anspruch 1 oder dem Oberbegriff des Anspruchs 1, **dadurch gekennzeichnet, dass** die Leitradschaufeln (44) in ihrem dem Turbinenrad (26) zugewandt liegenden Anströmbereich (48) an einer Druckseite derselben und einer Saugseite derselben ein konvex gewölbtes Außenprofil aufweisen, wobei für wenigstens einen Radialbereich der Leitradschaufeln (44) gilt:

a) $0{,}15 < R_D\,/\,Dmax < 0{,}3$
oder/und
b) $0{,}1 < R_S\,/\,Dmax < 0{,}25$
oder/und
c) $0{,}2 < Dmax\,/\,L < 0{,}4$,

wobei:

$R_D$ der Wölbungsradius des Außenprofils im Anströmbereich (48) an der Druckseite in dem Radialbereich ist,
$R_S$ der Wölbungsradius des Außenprofils im Anströmbereich (48) an der Saugseite in dem Radialbereich ist,
Dmax eine maximale Dicke der Leitradschaufeln in dem Radialbereich ist,
L eine Profillänge der Leitradschaufeln (44) in dem Radialbereich ist.

3. Hydrodynamischer Drehmomentwandler nach Anspruch 2,

**dadurch gekennzeichnet, dass** der Radialbereich im Wesentlichen die gesamte radiale Erstreckungslänge der Leitradschaufeln (44) umfasst.

4. Hydrodynamischer Drehmomentwandler nach einem der Ansprüche 1 bis 3 oder dem Oberbegriff des Anspruchs 1,
**dadurch gekennzeichnet, dass** gilt:

d) $0{,}6\ Dmax < 0{,}9$
oder/und
e) $1{,}12 < Mpmax\,/\,Mp0 < 1{,}39$
oder/und
f) $0{,}8 < MpK\,/\,Mp0 < 1{,}2$,

wobei:

Mpmax das maximale Pumpenmoment ist,
Mp0 das Pumpenmoment bei einem Verhältnis der Drehzahl des Turbinenrads (26) zur Drehzahl des Pumpenrads (20) von 0 ist,
MpK das Pumpenmoment an einem Kupplungspunkt des Leitrads (44) ist,
Dmax das Verhältnis der Drehzahl des Turbinenrads (26) zur Drehzahl des Pumpenrads (20) bei Mpmax ist.

5. Hydrodynamischer Drehmomentwandler nach Anspruch 4, **dadurch gekennzeichnet, dass** gilt:

d1) $0{,}65 < Dmax < 0{,}69$
oder
d2) $0{,}71\ Dmax < 0{,}74$
oder
d3) $0{,}76 < Dmax < 0{,}85$.

**Claims**

1. Hydrodynamic torque converter, comprising a fluid-filled or fluid-fillable housing (12), on the housing (12) a pump wheel (20) with pump-wheel blades (18) succeeding one another in the circumferential direction about an axis of rotation (A), in a housing inner space (24) of the housing (12) a turbine wheel (26) lying opposite the pump wheel (20) and having turbine-wheel blades (28) succeeding one another in the circumferential direction about the axis of rotation (A), in converter operation fluid flowing in fluid circulation (Z) between the pump wheel (20) and the turbine wheel (26), and a guide wheel (38) rotatable in one direction of rotation about the axis of rotation (A) and having guide-wheel blades (44) which succeed one another in the circumferential direction about the axis of rotation (A) and which are arranged in a radially inner region of the turbine-wheel blades (28) and of the pump-wheel blades (18), between these, in such a way that fluid circulation (Z) between the turbine wheel (26) and the pump wheel (20) flows around the guide-wheel blades (44), such a circumferential spacing being formed between guide-wheel blades (44) succeeding one another in the circumferential direction such that the guide-wheel blades (44) do not overlap one another in the circumferential direction, and the circumferential spacing $(A_i)$ in the region of an inner flow filament $(S_i)$ of the fluid circulation (Z) being greater than the circumferential spacing $(A_a)$ in the region of an outer flow filament $(S_a)$, **characterized in that**, for the ratio of the circumferential spacing $(A_a)$ at the outer flow filament $(S_a)$ to the circumferential spacing $(A_i)$ at the inner flow filament $(S_i)$, the following applies:

$$0.05 < A_a/A_i < 0.4.$$

2. Hydrodynamic torque converter according to Claim 1 or the precharacterizing clause of Claim 1, **characterized in that** the guide-wheel blades (44) have a convexly curved outer profile in their inflow region (48) facing the turbine wheel (26), on a delivery side of these and on a suction side of these, wherein for at least one radial region of the guide-wheel blades (44), the following applies:

a) $0.15 < R_D / Dmax < 0.3$
and/or
b) $0.1 < R_S / Dmax < 0.25$
and/or
c) $0.2 < Dmax / L < 0.4$,

in which:

$R_D$ being the radius of curvature of the outer profile in the inflow region (48) on the delivery side in the radial region,
$R_S$ being the radius of curvature of the outer profile in the inflow region (48) on the suction side in the radial region,
Dmax being a maximum thickness of the guide-wheel blades in the radial region,
L being a profile length of the guide-wheel blades (44) in the radial region.

3. Hydrodynamic torque converter according to Claim 2, **characterized in that** the radial region comprises essentially the entire radial length of extent of the guide-wheel blades (44).

4. Hydrodynamic torque converter according to one of Claims 1 to 3 or the precharacterizing clause of Claim 1, **characterized in that** the following applies:

d) $0.6 < Dmax < 0.9$

and/or
e) $1.12 < Mpmax / Mp0 < 1.39$
and/or
f) $0.8 < Mpk / Mp0 < 1.2$,

in which:

Mpmax being the maximum pump moment,
Mp0 being the pump moment in the case of a ratio of the rotational speed of the turbine wheel (26) to the rotational speed of the pump wheel (20) of 0,
MpK being the pump moment at a coupling point of the guide wheel (44),
Dmax being the ratio of the rotational speed of the turbine wheel (26) to the rotational speed of the pump wheel (20) in the case of Mpmax.

5. Hydrodynamic torque converter according to Claim 4, **characterized in that** the following applies:

d1) $0.65 < Dmax < 0.69$
or
d2) $0.71 < Dmax < 0.74$
or
d3) $0.76 < Dmax < 0.85$.

**Revendications**

1. Convertisseur de couple hydrodynamique, comprenant un boîtier (12) rempli ou pouvant être rempli de fluide, sur le boîtier (12), une roue de pompe (20) avec des aubes de roue de pompe (18) se suivant les unes les autres dans la direction périphérique autour d'un axe de rotation (A), dans un espace intérieur de boîtier (24) du boîtier (12), une roue de turbine (26) opposée à la roue de pompe (20) avec des aubes de roue de turbine (28) se suivant les unes les autres dans la direction périphérique autour de l'axe de rotation (A), du fluide s'écoulant, pendant le fonctionnement du convertisseur, dans une circulation fluidique (Z) entre la roue de pompe (20) et la roue de turbine (26), une roue directrice (38) pouvant tourner dans un sens de rotation autour de l'axe de rotation (A), avec des aubes de roue directrice (44) se suivant les unes les autres dans la direction périphérique autour de l'axe de rotation (A), lesquelles sont disposées dans une région radialement intérieure des aubes de roue de turbine (28) et des aubes de roue de pompe (18) entre celles-ci, de telle sorte que la circulation fluidique (Z) circule autour des aubes de roue directrice (44) entre la roue de turbine (26) et la roue de pompe (20), une distance périphérique étant formée entre des aubes de roue directrice (44) se suivant les unes les autres dans la direction périphérique de telle sorte que les aubes de roue directrice (44) ne se chevauchent pas dans la direction périphérique et que la distance périphérique ($A_i$) dans la région d'un trajet d'écoulement interne ($S_i$) de la circulation fluidique (Z) soit plus grande que la distance périphérique ($A_a$) dans la région d'un trajet d'écoulement externe ($S_a$),

**caractérisé en ce que** pour le rapport de la distance périphérique ($A_a$) au niveau du trajet d'écoulement externe ($S_a$) à la distance périphérique ($A_i$) au niveau du trajet d'écoulement interne (Si), l'on a la formule suivante :

$$0{,}05 < A_a / A_i < 0{,}4.$$

2. Convertisseur de couple hydrodynamique selon la revendication 1 ou le préambule de la revendication 1,

**caractérisé en ce que** les aubes de roue directrice (44) présentent, dans leur région d'afflux (48) tournée vers la roue de turbine (26), sur un côté pression de celles-ci, et sur un côté aspiration de celles-ci, un profil extérieur de courbure convexe, et pour au moins une région radiale des aubes de roue directrice (44), on a les formules suivantes :

a) $0{,}15 < R_D / D_{max} < 0{,}3$
et/ou
b) $0{,}1 < R_S / D_{max} < 0{,}25$
et/ou
c) $0{,}2 < D_{max} / L < 0{,}4$,
$R_D$ étant le rayon de courbure du profil extérieur dans la région d'afflux (48) sur le côté pression dans la région radiale,
$R_S$ étant le rayon de courbure du profil extérieur dans la région d'afflux (48) sur le côté aspiration dans la région radiale,
$D_{max}$ étant une épaisseur maximale des aubes de roue directrice dans la région radiale, et
L étant une longueur de profil des aubes de roue directrice (44) dans la région radiale.

3. Convertisseur de couple hydrodynamique selon la revendication 2, **caractérisé en ce que** la région radiale comprend essentiellement toute la longueur d'étendue radiale des aubes de roue directrice (44).

4. Convertisseur de couple hydrodynamique selon l'une quelconque des revendications 1 à 3 ou le préambule de la revendication 1,
**caractérisé en ce que** l'on a :

d) $0{,}6 < D_{max} < 0{,}9$
et/ou
e) $1{,}12 < M_{pmax} / Mp0 < 1{,}39$
et/ou
f) $0{,}8 < M_{pK} / M_{p0} < 1{,}2$,
$M_{pmax}$ étant le couple de pompe maximum,

$M_{p0}$ étant le couple de pompe dans le cas d'un rapport entre la vitesse de rotation de la roue de turbine (26) et la vitesse de rotation de la roue de pompe (20) de 0,
$M_{pK}$ étant le couple de pompe à un point d'accouplement de la roue directrice (44), et
$D_{max}$ étant le rapport de la vitesse de rotation de la roue de turbine (26) à la vitesse de rotation de la roue de pompe (20) pour un couple $M_{pmax}$.

5. Convertisseur de couple hydrodynamique selon la revendication 4,
**caractérisé en ce que** l'on a :

d1) $0{,}65 < D_{max} < 0{,}69$
ou
d2) $0{,}71 < D_{max} < 0{,}74$
ou
d3) $0{,}76 < D_{max} < 0{,}85$.

Fig. 1

EP 2 146 115 B1

# Fig. 2

# Fig. 3

$U$

44

46

$A_i$

48

44

44

44

44

$A_a$

# Fig. 4

48

$R_S$

$R_D$

$D_{max}$

$S_p$

44

46

Fig. 5

# Fig. 6

**EP 2 146 115 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030110764 A1